# EUROPEAN PATENT APPLICATION

(11) **EP 1 975 762 A1**
(43) Date of publication of application: **01.10.2008**
(21) Application number: 08005128.7
(22) Date of filing: 19.03.2008
(51) Int. Cl.: G06F 1/16

(54) **Information processing apparatus**

(30) Priority: 30.03.2007 JP 2007093728
(71) Applicant: KABUSHIKI KAISHA TOSHIBA, Tokyo (JP)
(72) Inventor: Matsushita, Satoshi, Tokyo (JP)
(74) Representative: HOFFMANN EITLE

(57) **Abstract**

According to an aspect of the present invention, there is provided an information processing apparatus including: a first chassis; a second chassis; a two-axis joint part that joins the second chassis to the first chassis openably and swingably with respect to a first axis and a second axis; a magnet disposed in the second chassis in proximity to the first axis; and a magnetic sensor that senses at least two opposed directions of a magnetic field; wherein the magnetic sensor is disposed at a position in proximity to the magnet when the second chassis is closed with respect to the first chassis.

## Description

### CROSS-REFERENCE TO RELATED APPLICATIONS

This application is based upon and claims the benefit of priority from Japanese Patent Application No. 2007-093728, filed March 30, 2007, the entire contents of which are incorporated herein by reference.

### BACKGROUND

### 1. Field

An aspect of the present invention relates to an information processing apparatus having a first chassis and a second chassis adjustable to any positions with respect to the first chassis.

### 2. Description of the Related Art

A convertible structure has been often adopted for an information processing apparatus having a first chassis and a second chassis joined to the first chassis, such as a folding mobile telephone or a notebook personal computer.

The information processing apparatus having a convertible structure enables the user to position the second chassis relative to the first chassis at least in two states. When the convertible structure is adopted for a notebook personal computer including a first chassis having a keyboard on the top and a second chassis having a liquid crystal display screen, the second chassis can be positioned relative to the first chassis in a first state (normal mode) and a second state (tablet mode). In the first state (normal mode), the top face of the first chassis is covered with the screen face of the liquid crystal display screen of the second chassis. In the second state (tablet mode), the top face of the first chassis is covered with the rear face of the second chassis so that the liquid crystal display screen is exposed.

To improve the operability of the information processing apparatus having the convertible structure easily operable, it is necessary to precisely determine which state the information processing apparatus is positioned in at present.

JP-A-2006-252546 discloses the technic to determine the positional state.

A switchable (convertible) computer system disclosed in JP-A-2006-252546 is a computer system having a first chassis, a second chassis having a liquid crystal display screen and a joint section jointing the first chassis and the second chassis therethrough. The joint section supports the second chassis openably/closeably and swingably. It includes one magnet provided in one of the first chassis and the second chassis and one lead switch provided in the other, wherein the lead switch is provided at a position where it can detect a magnetic field generated by the magnet when the chassis is closed in a tablet mode, whereby whether the chassis is closed in the tablet mode can be determined.

When the magnet is provided in the upper right part of the face of the liquid crystal display screen on the second chassis, the lead switch is provided at the front left of the first chassis, whereby the lead switch can detect a magnetic field generated by the magnet when the chassis is closed in the tablet mode. Based on the detection result, it is made possible for the computer system to determine whether the chassis is closed in the tablet mode. Therefore, the computer system can determine whether the state is the tablet mode or a non-tablet mode (laptop mode).

When the chassis is closed in the tablet mode, the computer system displays an image appropriate for use in the tablet mode on the liquid crystal display screen. When the chassis is not closed in the tablet mode, the computer system displays an image appropriate for use as a usual notebook personal computer (an image for the laptop mode) on the liquid crystal display screen.

Generally, for power saving, it is desirable that display of a liquid crystal display screen can be extinguished when the information processing apparatus (the second chassis) is closed. Therefore, it is desirable that whether the information processing apparatus (the second chassis) is closed in the normal mode can be determined.

In the related art, a lead switch is used as a magnetic sensor for detecting the magnetic field of a magnet. Whether the information processing apparatus is used as a usual notebook personal computer (in the laptop mode) is determined by the fact that the strength of the magnetic field generated by the magnet detected by the lead switch falls below a predetermined strength.

The lead switch can detect the magnetic field generated by the magnet, but cannot detect the magnetic field direction. Thus, one magnet and one lead switch would be unable to determine which state of the normal mode and the tablet mode the information processing apparatus (the second chassis) is closed in. Therefore, to determine whether the information processing apparatus (the second chassis) is closed in the normal mode (laptop mode), it is necessary to provide a new additional mechanism of a contact switch, etc., or further provide another lead switch.

However, the contact switch is susceptible to the use environment and is easily degraded as compared with a noncontact lead switch. To further provide another lead switch, the circuit mounting area required for installing the lead switch may cause a problem particularly in a portable information processing apparatus, etc., requiring miniaturization.

### SUMMARY

An object of the present invention is to provide an information processing apparatus having a convertible structure including a first chassis and a second chassis openable and swingable relative to the first chassis and capable of determining plural closed states only with one magnetic sensor.

According to an aspect of the present invention, there is provided an information processing apparatus including: a first chassis; a second chassis; a two-axis joint part that joins the second chassis to the first chassis openably and swingably with respect to a first axis and a second axis; a magnet disposed in the second chassis in proximity to the first axis; and a magnetic sensor that senses at least two opposed directions of a magnetic field; wherein the magnetic sensor is disposed at a position in proximity to the magnet when the second chassis is closed with respect to the first chassis.

The magnetic sensor may sense two directions of a magnetic field generated by the magnet.

The magnetic sensor may sense a magnetic field having a strength of a predetermined value or more to detect whether the magnet is positioned within a predetermined distance from the magnetic sensor.

The magnet may include: a first magnet disposed on one face of the second chassis, and a second magnet disposed on the other face of the second chassis. The first magnet and the second magnet may have the same magnetization direction.

The magnetization direction of the first and the second magnets may be parallel to a normal direction of one face of the second chassis.

According to another aspect of the present invention, there is provided an information processing apparatus including: a first chassis having a first face; a second chassis having a second face and a third face that is rear of the second face; a magnetic sensor disposed in the first chassis; a first magnet disposed in the second chassis so as to become close with the magnetic sensor when the second chassis is closed relative to the first chassis so that the second face oppose to the first face; and a second magnet disposed in the second chassis so as to become close with the magnetic sensor when the second chassis is closed relative to the first chassis so that the third face oppose to the first face, wherein the first and the second magnets have the same magnetization direction, and wherein the magnetic sensor is capable of determining two kind of directions of the magnetic fields generated by the first and the second magnets.

The information processing apparatus may further include: a two-axis joint part that joins the second chassis to the first chassis openably and swingably with respect to a first axis and a second axis.

The two-axis joint part may support the second chassis so that the second chassis can be opened and closed when the second face is opposed to the first face and when the third face is opposed to the first face.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

FIG. 1 is an exemplary schematic configuration drawing to show an information processing apparatus according to a first embodiment;

FIG. 2 is an exemplary appearance of the information processing apparatus in a normal mode;

FIG. 3 is an exemplary appearance of the information processing apparatus in a tablet mode;

FIG. 4A is an exemplary front view of the information processing apparatus in a laptop mode and FIG. 4B is an exemplary side view of the information processing apparatus in the laptop mode;

FIG. 5 shows the exemplary positional relationship between a magnet and a magnetic sensor in plural positioning states of the information processing apparatus;

FIG. 6 is an exemplary side view of an information processing apparatus according to a second embodiment in a normal mode;

FIG. 7A is an exemplary front view of the information processing apparatus according to the second embodiment in a laptop mode and FIG. 7B is an exemplary side view in the laptop mode; and

FIG. 8 is an exemplary drawing to describe the state transition of an information processing apparatus according to a third embodiment.

### DETAILED DESCRIPTION

Various embodiments according to the invention will be described hereinafter with reference to the accompanying drawings. In general, according to one embodiment of the invention, an information processing apparatus includes: a first chassis; a second chassis; a two-axis joint part that joins the second chassis to the first chassis openably and swingably with respect to a first axis and a second axis; a magnet disposed in the second chassis in proximity to the first axis; and a magnetic sensor that senses at least two opposed directions of a magnetic field; wherein the magnetic sensor is disposed at a position in proximity to the magnet when the second chassis is closed with respect to the first chassis.

Referring now to the accompanying drawings, there are shown embodiments of an information processing apparatus.

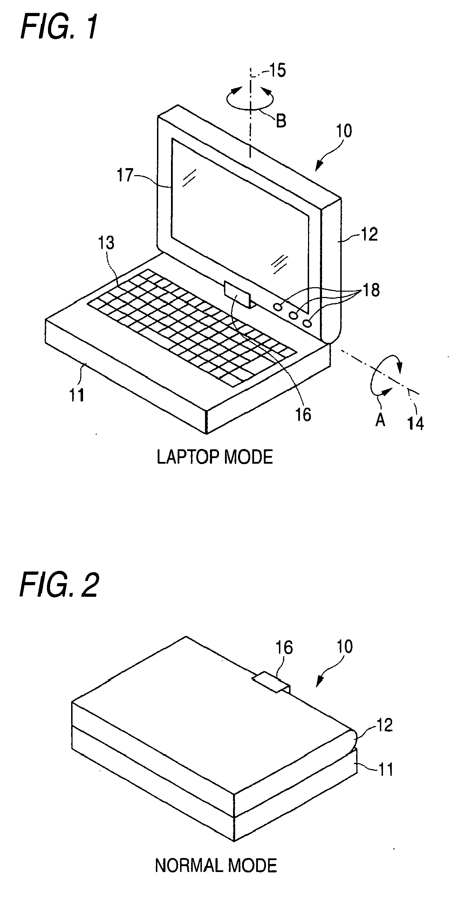

FIG. 1 is an exemplary schematic configuration drawing to show an information processing apparatus 10 according to a first embodiment.

In the description to follow, a notebook personal computer is shown as an example of the information processing apparatus 10.

The information processing apparatus 10 includes a computer main body 11 as a first chassis and a display unit 12 as a second chassis.

The computer main body 11 has a keyboard 13 in the center of the top of the chassis. The display unit 12 has a display input section 17 and hard keys 18. The display input section 17 has an LCD as a display section and a pen tablet device as an input section. The hard keys 18 are provided in the lower right portion of the display input section 17 of the display unit 12.

The display unit 12 is joined through a two-axis joint part 16 (hinge) so as to be rotatable between the opened position and the closed position in the direction of the arrow A with a rotating axis 14 as the center and swingable in the direction of the arrow B with a swinging axis 15 as the center relative to the computer main body 11. Thus, the position of the display unit 12 can be adjusted relative to the computer main body 11.

The information processing apparatus 10 can be configured so as to determine an opened state (laptop mode) and a closed state based on the position of the display unit 12 (second chassis) relative to the computer main body 11 (first chassis). Regarding the closed state, the information processing apparatus 10 further determines a normal mode or a tablet mode.

FIG. 1 shows an example of the information processing apparatus 10 in the laptop mode. In the following description, the position of the display unit 12 relative to the computer main body 11 appropriate for using as a usual notebook personal computer is referred to as the laptop mode.

FIG. 2 is an appearance of the information processing apparatus 10 in the normal mode. In the following description, a state in which the display unit 12 is closed with the rotating axis 14 as the center from the laptop mode, and in which the keyboard 13 of the computer main body 11 is covered with the display input section 17 of the display unit 12 is referred to as the normal mode.

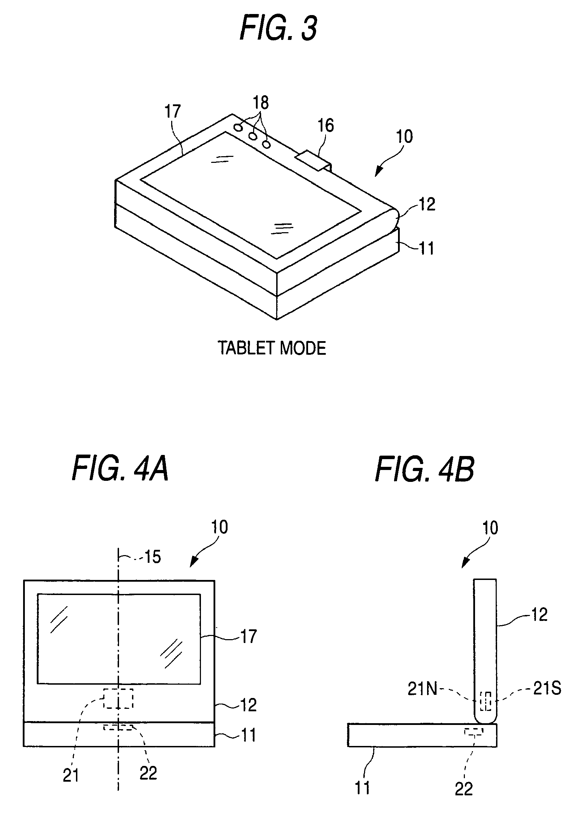

FIG. 3 is an exemplary appearance of the information processing apparatus 10 in the tablet mode. In the description to follow, a state in which the keyboard 13 of the computer main body 11 is covered with the rear face of the display unit 12 and the display input section 17 is exposed is referred to as the tablet mode.

FIG. 4A is a front view of the information processing apparatus 10 in the laptop mode and FIG. 4B is a side view of the information processing apparatus 10 in the laptop mode.

As shown in FIG. 4A, one magnet 21 is placed in the vicinity of the swinging axis 15 of the display unit 12. In the embodiment, as an example, an N pole side 21N of the magnet 21 is placed on the display input section 17 side, and an S pole side 21S of the magnet 21 is placed on the rear side of the display input section 17 as shown in FIG. 4B.

In FIGS. 4A and 4B, the magnet is placed in the vicinity of the joint part 16 of the display unit 12 by way of example, but may be placed in the vicinity of the swinging axis 15 and need not be placed in the vicinity of the joint part 16.

One magnetic sensor 22 is provided in the computer main body 11 at a position where it can detect a magnetic field generated by the magnet 21 (preferably, a position close to the magnet 21) when the display unit 12 is closed in the normal mode (see FIG. 2) or the tablet mode (see FIG. 3).

The magnetic sensor 22 can detect the directions of at least two opposed magnetic fields. The magnetic sensor 22 detects a magnetic field of a predetermined strength or more and outputs a respective signal according to the direction of the detected magnetic field. The magnetic sensor 22 is placed in the computer main body 11 so that it can determine the directions of two magnetic fields along the normal direction of the top face of the computer main body 11 (upward and downward in the up and down direction in FIGS. 4A and 4B) to determine the normal mode or the tablet mode based on the direction of the magnetic field generated by the magnet 21.

Next, the positions of the magnet 21 and the magnetic sensor 22 on each state of the information processing apparatus 10 will be briefly discussed to explain how to determine the state of the information processing apparatus 10 with one magnetic sensor 22.

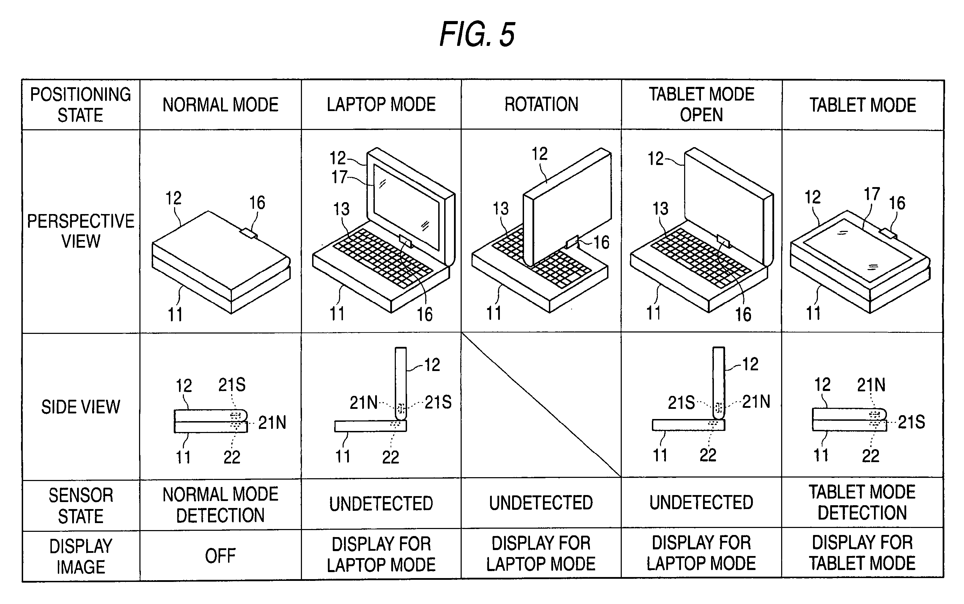

FIG. 5 shows the positional relationships between the magnet 21 and the magnetic sensor 22 each corresponding to a respective positional state of the information processing apparatus 10.

The positional relationship between the magnet 21 and the magnetic sensor 22 in the normal mode is shown under the leftmost column in FIG. 5. In the normal mode, the magnetic sensor 22 is opposed to the N pole 21N of the magnet 21 and outputs information indicating that the direction of the magnetic field generated by the N pole 21N is detected.

This information is used, for example, by a CPU of the information processing apparatus 10 to determine that the information processing apparatus (the second chassis) is closed in the normal mode and take steps suited to the normal mode, such as turning off the LCD.

The positional relationship between the magnet 21 and the magnetic sensor 22 in the laptop mode is shown under the second column from the left in FIG. 5. A side view in this state is the same as FIG. 4B. In the laptop mode, the magnet 21 and the magnetic sensor 22 are distant from each other as compared with the normal mode. It is assumed that a predetermined magnetic field strength that can be detected by the magnetic sensor 22 is less than the magnetic field strength in the vicinity of the magnetic sensor 22 in the laptop mode. In the laptop mode, the magnetic sensor 22 outputs information indicating that a magnetic field of the predetermined strength or more cannot be detected.

This information is used, for example, by the CPU of the information processing apparatus 10 to determine that the information processing apparatus (the second chassis) is open in the laptop mode and display an image suited to use in the laptop mode on the LCD.

The third column from the left in FIG. 5 is a perspective view to show a state in which the display unit 12 is swung relative to the computer main body 11 with the swinging axis 15 as the center. When the display unit 12 is swung with the swinging axis 15 as the center, the magnetic sensor 22 also outputs information indicating that a magnetic field of the predetermined strength or more cannot be detected.

The positional relationship between the magnet 21 and the magnetic sensor 22 in a state in which the display unit 12 is opened from the laptop mode (tablet mode open) is shown under the fourth column from the left in FIG. 5. Also in this state, the magnetic sensor 22 outputs information indicating that a magnetic field of the predetermined strength or more cannot be detected.

The positional relationship between the magnet 21 and the magnetic sensor 22 in the tablet mode is shown under the fifth column from the left in FIG. 5. In the tablet mode, the magnetic sensor 22 is opposed to the S pole 21S of the magnet 21. Thus, in the tablet mode, the magnetic sensor 22 outputs information indicating that the direction of the magnetic field generated by the S pole 21S is detected.

This information is used, for example, by the CPU of the information processing apparatus 10 to determine that the information processing apparatus (the second chassis) is closed in the tablet mode and display an image suited to use in the tablet mode on the LCD.

The information processing apparatus 10 has one magnet 21 in the vicinity of the swinging axis 15 and uses a sensor for detecting a magnetic field of the predetermined magnetic field strength or more and outputting a different signal according to the direction of the detected magnetic field as the magnetic sensor 22. Thus, only one magnet 21 and one magnetic sensor 22 can determine the opened state (laptop mode) and plural closed states (normal mode and tablet mode).

The magnetic sensor 22 is often mounted on one printed circuit board together with circuitry of a magnetic field strength determination section for determining whether the magnetic field strength is equal to or more than a predetermined strength, a magnetic field direction determination section for determining the direction of the magnetic field, etc., based on the output signal of the magnetic sensor 22, and the size of the mounting area may cause a problem.

The information processing apparatus 10 can determine a normal mode or a tablet mode in the closed state only one magnetic sensor 22. Thus, the mounting area can be lessened as compared with the case where two or more magnetic sensors 22 are used and the outer dimensions can be shrunk. This configuration is suited to a portable information processing apparatus 10. The configuration according to the embodiment can be applied not only to the notebook personal computer, but also particularly to a portable information processing apparatus 10 of a mobile telephone, a PDA (Personal Digital Assistant), a portable gaming machine, a portable music player, a portable moving image player, etc.

It is not necessary to place the magnet 21 so as to have the magnetization direction (the normal direction of the face of the display input section 17) shown in the embodiment. The magnet 21 may be placed so that the direction of the magnetic field becomes parallel to the face of the display input section 17. When the magnet 21 have the magnetization direction parallel to the top side or the bottom side of the display unit 12, the magnetic sensor 22 may be placed in the computer main body 11 so as to be able to determine the directions of two magnetic fields along a direction parallel to the depth side or the front side of the computer main body 11 (leftward and rightward in the side to side direction in FIG. 4A).

Next, a second embodiment of an information processing apparatus according will be discussed.

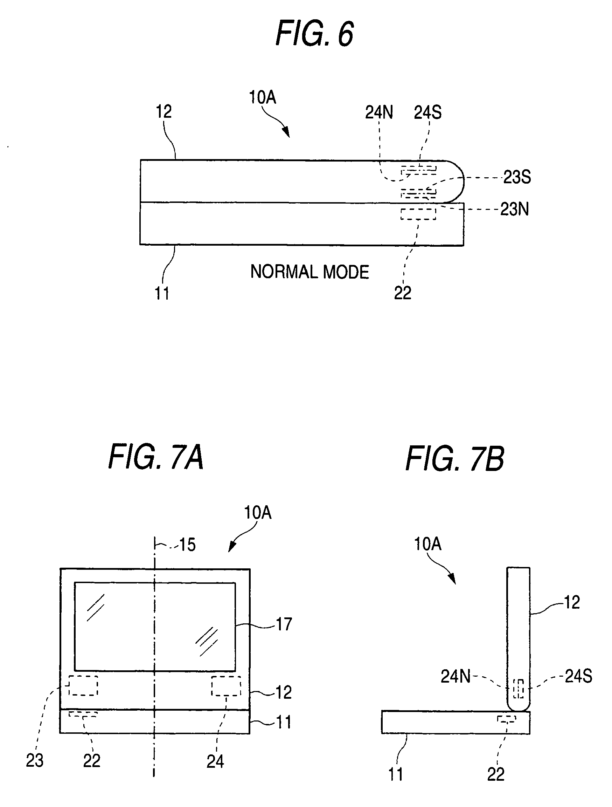

FIG. 6 is a side view of an information processing apparatus 10A according to the second embodiment in a normal mode.

The information processing apparatus 10A shown in the second embodiment differs from the information processing apparatus 10 shown in the first embodiment in use of two magnets 23 and 24 for normal mode detection and tablet mode detection. Other components and functions do not substantially differ from those of the information processing apparatus 10 shown in FIG. 1 and therefore the identical components are denoted by the same reference numerals in FIG. 6 and will not be discussed again.

It is considered that the second embodiment is applied particularly when a display unit 12 is thick, when small magnets are used, etc.

The magnets 23 and 24 are placed so that the direction of a magnetic field piercing a magnetic sensor 22 in the normal mode is different from that in the tablet mode.

In an example shown in FIG. 6, the two magnets 23 and 24 are placed in the vicinity of a swinging axis 15 of the display unit 12. The magnet 23 is placed in the proximity of the face of the display unit 12 on which a display input section 17 is disposed and the magnet 24 is placed in the proximity of the rear face of the display unit 12.

The magnets 23 and 24 are placed to have the same magnetization direction so that the direction of the magnetic field piercing a magnetic sensor 22 in the normal mode become the different from the direction of the magnetic field piercing a magnetic sensor 22 in the tablet mode.

FIG. 6 shows the case where the magnets 23 and 24 are placed so that the magnetization directions thereof become the normal direction of the face of the display input section 17 and that an N pole side 23N of the magnet 23 becomes the display input section 17 side and an S pole side 24S of the magnet 24 becomes the rear of the display input section 17 by way of example.

One magnetic sensor 22 is provided in a computer main body 11 at a position where it can detect a magnetic field generated by the magnet 23 or 24 when the display unit 12 is closed in the normal mode (see FIG. 2) or the tablet mode (see FIG. 3).

In the normal mode of the information processing apparatus 10A, the magnetic sensor 22 is opposed to the N pole 23N of the magnet 23. Thus, in the normal mode, the magnetic sensor 22. outputs information indicating that the direction of the magnetic field generated by the N pole 23N is detected.

In the tablet mode of the information processing apparatus 10A, the magnetic sensor 22 is opposed to the S pole 24S of the magnet 24. Thus, in the tablet mode, the magnetic sensor 22 outputs information indicating that the direction of the magnetic field generated by the S pole 24S is detected.

Therefore, the normal mode and the tablet mode differ in the direction of the magnetic field detected by the magnetic sensor 22. The normal mode and the tablet mode can be determined based on the direction of the detected magnetic field.

FIGS. 7A and 7B are drawings to show a modified example of the information processing apparatus 10A in the second embodiment. FIG. 7A is a front view of the information processing apparatus 10A in the laptop mode and FIG. 7B is a side view in the laptop mode.

To use two magnets, the magnetic sensor 22 may be placed anywhere in the computer main body 11. FIGS. 7A and 7B show an example wherein the magnetic sensor 22 is placed in the left depth of the computer main body 11.

If the magnetic sensor 22 is placed in the left depth of the computer main body 11, the magnets 23 and 24 are placed at the left and the right of the lower side of the display unit 12 respectively as shown in FIG. 7A.

The magnets 23 and 24 are placed to have the same magnetization direction so that the direction of the magnetic field piercing the magnetic sensor 22 in the normal mode is different from that in the tablet mode as with the information processing apparatus 10A shown in FIG. 6. FIGS. 7A and 7B show the case where the magnets 23 and 24 are placed so that the magnetization directions thereof become the normal direction of the face of the display input section 17 and that N pole sides 23N and 24N of the magnets 23 and 24 become the display input section 17 side and S pole sides 23S and 24S of the magnets 23 and 24 becomes the rear of the display input section 17 by way of example.

To facilitate magnetic field strength detection of the magnetic sensor 22, it is advisable to place the magnet 23 in the proximity of the face of the display input section 17 and the magnet 24 in the proximity of the rear of the display input section 17.

Also in the information processing apparatus 10A shown in FIGS. 7A and 7B, the magnetic sensor 22 can detect the direction of the magnetic field generated by the N pole 23N of the magnet 23 in the normal mode and can detect the direction of the magnetic field generated by the S pole 24S of the magnet 24 in the tablet mode as with the information processing apparatus 10 shown in FIG. 6.

Thus, also according to the information processing apparatus 10A shown in FIGS. 7A and 7B, the normal mode and the tablet mode differ in the direction of the magnetic field detected by the magnetic sensor 22 and the normal mode and the tablet mode can be determined based on the direction of the detected magnetic field.

Therefore, the information processing apparatus 10A shown in FIGS. 6 and 7A and 7B can also determine the opened state (laptop mode) and plural closed states (normal mode and tablet mode).

The information processing apparatus 10A shown in FIGS. 6 and 7A and 7B use as the magnetic sensor 22, a sensor for detecting a magnetic field of a predetermined magnetic field strength or more and outputting a different signal according to the direction of the detected magnetic field like the information processing apparatus 10 shown in FIG. 1. Thus, although the two magnets are used, only one magnetic sensor 22 can determine the opened state (laptop mode) and plural closed states (normal mode and tablet mode).

Generally, the magnet is inexpensive as compared with a sensor and in addition, the mounting area may be extremely small because a member required for placing other than the magnet does not exist.

Therefore, the information processing apparatus 10A according to the second embodiment can also provide functions and advantages similar to those provided by using only one magnetic sensor 22 in the information processing apparatus 10 according to the first embodiment.

The information processing apparatus 10A according to the second embodiment uses the two magnets. Thus, the embodiment can be applied particularly when the display unit 12 is thick, when small magnets are used, etc.

Next, a third embodiment of an information processing apparatus will be discussed.

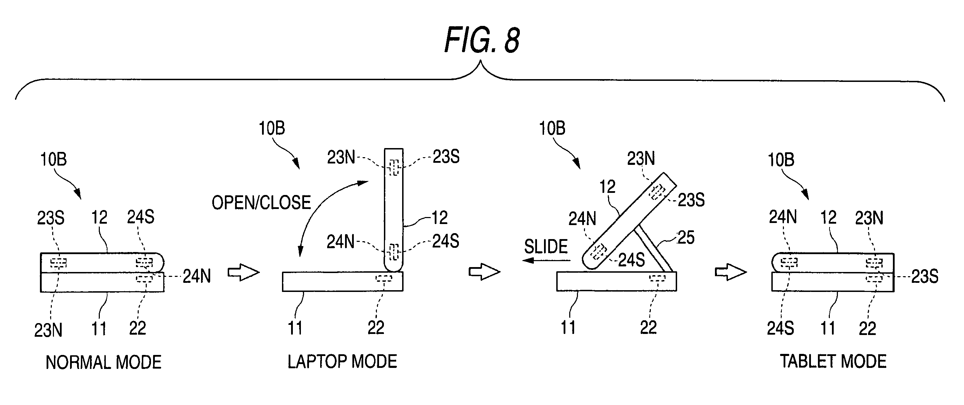

FIG. 8 shows the state transition of an information processing apparatus 10B according to a third embodiment.

The information processing apparatus 10B shown in the third embodiment differs from the information processing apparatus 10 shown in the first embodiment in that it is configured so as to be able to determine a normal mode and a tablet mode regardless of whether the front side of a computer main body 11 in a closed state is brought close to the top side or the bottom side of a display unit 12 in a laptop mode. Other components and functions do not substantially differ from those of the information processing apparatus 10 shown in FIG. 1 and therefore the identical components are denoted by the same reference numerals in the third embodiment and will not be discussed again.

In the first and second embodiments, in the closed state, the front side of the computer main body 11 is always close to the top side of the display unit 12. On the other hand, the information processing apparatus 10B according to the third embodiment is configured so as to be able to determine the normal mode and the tablet mode regardless of whether the front side of the computer main body 11 is brought close to the top side or the bottom side of the display unit 12 in the closed state.

FIG. 8 shows an example wherein two magnets 23 and 24 for normal mode detection and tablet mode detection are used and the display unit 12 is joined to the computer main body 11 through a slide member that can be opened/closed and can be slid relative to the computer main body 11.

The information processing apparatus 10B is opened with an rotating axis 14 as the center (the second from the left of FIG. 8) from the normal mode (the left of FIG. 8) and then the bottom of the display unit 12 in the laptop mode is slid to the side toward the user (the left of the plane of FIG. 8) as it is supported on the slide member, whereby the information processing apparatus 10B can make a transition to the tablet mode.

The magnets 23 and 24 are placed to have the same magnetization direction so that the direction of a magnetic field piercing a magnetic sensor 22 in the normal mode is different from that in the tablet mode.

FIG. 8 shows the case where the magnets 23 and 24 are placed so that the magnetization directions thereof become the normal direction of the face of a display input section 17 and that N pole sides 23N and 24N of the magnets 23 and 24 become the display input section 17 side and S pole sides 23S and 24S of the magnets 23 and 24 becomes the rear of the display input section 17 by way of example.

The magnetic sensor 22 may be placed anywhere in the computer main body 11.

FIG. 8 shows an example wherein the magnetic sensor 22 is placed in the center depth of the computer main body 11 and the magnets 23 and 24 are placed at the center top and the center bottom of the display unit 12 in the laptop mode respectively. The magnets 23 and 24 and the magnetic sensor 22 are placed so that the distance from the top face and the bottom face of the display unit 12 in the laptop mode to the magnets 23 and 24 and the distance from the depth face of the computer main body 11 to the magnetic sensor 22 become almost equal.

As shown in FIG. 8, the magnetic sensor 22 can detect the direction of the magnetic field generated by the N pole 24N of the magnet 24 in the normal mode and can detect the direction of the magnetic field generated by the S pole 23S of the magnet 23 in the tablet mode. Thus, also according to the information processing apparatus 10B shown in FIG. 8, the normal mode and the tablet mode differ in the direction of the magnetic field detected by the magnetic sensor 22 and the normal mode and the tablet mode can be determined based on the direction of the detected magnetic field.

If the magnetic sensor 22 is placed in the vicinity of a line passing through the center of the top face of the computer main body 11 (the face having the keyboard 13) and parallel to the depth side or a side, whether the apparatus is in the normal mode or the tablet mode can be determined even in a state in which the display unit 12 is rotated 180 degrees relative to the computer main body 11 with the normal line piercing the center of the face of the display input section 17 as an axis.

For example, the case where the apparatus has a structure for enabling the computer main body 11 and the display unit 12 to be separated completely and the magnetic sensor 22 is placed in the vicinity of a line passing through the center of the top face of the computer main body 11 and parallel to the depth side will be discussed. For example, if the display unit 12 is rotated 180 degrees with the normal line piercing the center of the face of the display input section 17 as an axis in the normal mode shown at the left of FIG. 8, the magnetic sensor 22 detects the direction of the magnetic field generated by the N pole 23N of the magnet 23 in the normal mode. This means that the magnetic sensor 22 is common to that before the display unit 12 is rotated 180 degrees in the point of detecting the magnetic field generated by the N pole. Similar comments also apply to the table mode.

Further, if the magnetic sensor 22 is placed at the center of the computer main body 11, one magnet needs only to be placed at the center of the display unit 12.

The information processing apparatus 10B according to the third embodiment uses as the magnetic sensor 22, a sensor for detecting a magnetic field of a predetermined magnetic field strength or more and outputting a different signal according to the direction of the detected magnetic field like the information processing apparatus 10 shown in FIG. 1. Thus, only one magnetic sensor 22 can determine the opened state (laptop mode) and plural closed states (normal mode and tablet mode).

Therefore, the information processing apparatus 10B according to the third embodiment can also provide functions and advantages similar to those provided by using only one magnetic sensor 22 in the information processing apparatus 10 according to the first embodiment.

The information processing apparatus 10B according to the third embodiment is configured so as to be able to determine the normal mode and the tablet mode regardless of whether the front side of the computer main body 11 is brought close to the top side or the bottom side of the display unit 12 in the laptop mode. Therefore, if the computer main body 11 and the display unit 12 are joined by the slide member, etc., only one magnetic sensor 22 can also determine the opened state (laptop mode) and plural closed states (normal mode and tablet mode).

It is to be understood that the invention is not limited to the specific embodiments described above and that the invention can be embodied with the components modified without departing from the spirit and scope of the invention.

For example, in the first to third embodiments, the magnetic sensor is placed in the computer main body 11 and the magnet is placed in the display unit 12 by way of example, but the magnet may be placed in the computer main body 11 and the magnetic sensor may be placed in the display unit 12.

The invention can be embodied in various forms according to appropriate combinations of the components disclosed in the embodiments described above. For example, some components may be deleted from all components shown in the embodiment. Further, the components in different embodiments may be used appropriately in combination.

According to an aspect of the present invention, there is provided an information processing apparatus that has a convertible structure including a first chassis and a second chassis positioned in plural states relative to the first chassis and can determine plural closed states only with one magnetic sensor.

## Claims

1. An information processing apparatus comprising:
a first chassis;
a second chassis;
a two-axis joint part that joins the second chassis to the first chassis openably and swingably with respect to a first axis and a second axis;
a magnet disposed in the second chassis in proximity to the first axis; and
a magnetic sensor that senses at least two opposed directions of a magnetic field;
wherein the magnetic sensor is disposed at a position in proximity to the magnet when the second chassis is closed with respect to the first chassis.

2. The information processing apparatus according to claim 1,
wherein the magnetic sensor senses two directions of a magnetic field generated by the magnet.

3. The information processing apparatus according to claim 1,
wherein the magnetic sensor senses a magnetic field having a strength of a predetermined value or more to detect whether the magnet is positioned within a predetermined distance from the magnetic sensor.

4. The information processing apparatus according to claim 1,
wherein the magnet comprises:
a first magnet disposed on one face of the second chassis, and
a second magnet disposed on the other face of the second chassis, and
wherein the first magnet and the second magnet have the same magnetization direction.

5. The information processing apparatus according to claim 4,
wherein the magnetization direction of the first and the second magnets are parallel to a normal direction of one face of the second chassis.

6. An information processing apparatus comprising:
a first chassis having a first face;
a second chassis having a second face and a third face that is rear of the second face;
a magnetic sensor disposed in the first chassis;
a first magnet disposed in the second chassis so as to become close with the magnetic sensor when the second chassis is closed relative to the first chassis so that the second face oppose to the first face; and
a second magnet disposed in the second chassis so as to become close with the magnetic sensor when the second chassis is closed relative to the first chassis so that the third face oppose to the first face,
wherein the first and the second magnets have the same magnetization direction, and
wherein the magnetic sensor is capable of determining two kind of directions of the magnetic fields generated by the first and the second magnets.

7. The information processing apparatus according to claim 6 further comprising:
a two-axis joint part that joins the second chassis to the first chassis openably and swingably with respect to a first axis and a second axis.

8. The information processing apparatus according to claim 7,
wherein the two-axis joint part supports the second chassis so that the second chassis can be opened and closed when the second face is opposed to the first face and when the third face is opposed to the first face.
